# FASCICULE DE BREVET EUROPEEN

(11) **EP 0 508 890 B1**
(45) Date de publication et mention de la délivrance du brevet: **21.02.1996**
(21) Numéro de dépôt: 92400978.0
(22) Date de dépôt: 08.04.1992
(51) Int. Cl.: F16J 15/12, F16L 23/16

(54) **Anneau d'étanchéité armé**
Verstärkter Dichtring
Reinforced sealing ring

(30) Priorité: 12.04.1991 FR 9104499
(43) Date de publication de la demande: 14.10.1992
(73) Titulaire: SOCIETE INDUSTRIELLE D'EQUIPEMENT MECANIQUE SUPRANITE, F-75854 Paris Cédex 17 (FR)
(72) Inventeur: Dennys, Jean-Pierre, F-92200 Neuilly sur Seine (FR)
(74) Mandataire: Levy, David

(56) Documents cités:
- US-A- 2 882 083
- WORLD PATENTS INDEX LATEST Section PQ, Week 8815, Derwent Publications Ltd., London, GB; Class Q65, AN 88-103152 & JP-A-63 054 487 (SUMITOMO METAL IND KK - IMAE KOGYO KK) 8 Mars 1988

## Description

La présente invention concerne un joint d'étanchéité en graphite expansé pour notamment des brides à simple ou double emboîtement, solution utilisée dans l'industrie pour réaliser les étanchéités réputées difficiles.

Pour des raisons de santé et d'efficacité technique, il est de plus en plus souhaitable de remplacer les joints de brides conventionnels par des joints utilisant les qualités du graphite expansé.

Les couples de brides à emboitement utilisés présentent entre les faces en regard des contours cylindriques mâles et femelles qui contribuent au maintien du joint pendant sa compression. Mais entre ces contours a été généralement toléré un jeu qui peut atteindre jusqu'à 2,4 mm, ce qui est beaucoup trop large pour retenir le matériau malléable qu'est le graphite expansé.

Les industriels hésitent très souvent à modifier les dimensions de brides qui ont été normalisées et à réusiner les faces des brides en service.

Différents dispositifs ont été décrits, notamment par la demanderesse dans EP-A-0 496 651 pour contenir le graphite, mais ces dispositifs comportent des anneaux métalliques extérieur et intérieur qui doivent résister à la pression du graphite, ce qui implique des dimensions incompatibles avec la présence des emboitements des brides.

Paradoxalement, les brides à simple ou double emboitement qui sont actuellement réservées, en raison de leur prix, aux étanchéités les plus difficiles n'ont pas jusqu'à présent pu être équipées de joints en graphite expansé.

US 4 219 204 décrit, non pour des étanchéités de brides mais pour des presse étoupes de robinetterie, différents cerclages métalliques tricotés en contact ou collés en bordure des anneaux d'étanchéité.

Le tricot métallique est un ouvrage constitué par des mailles formées de boucles d'un fil habituellement cylindrique, qui pénètrent les unes dans les autres avec des contacts seulement ponctuels, ce qui le rend inapte à empêcher l'extrusion du graphite à travers les mailles. De plus, le tricotage génère, au sein du métal, des écrouissages et des tensions élastiques qui, après compression et démoulage, opérations nécessaires pour fabriquer l'anneau, tendent à repousser ledit graphite et à augmenter les dimensions de l'anneau au delà de celles du logement prévu pour le joint.

La demande de brevet européen EP-A-0187606 décrit deux anneaux métalliques intérieur et extérieur qui ont un effet ressort. Les revendications indépendantes 1 et 3 ont été délimitées par rapport à ce document.

Sous la pression du graphite les anneaux métalliques se déforment et cassent à moins d'être renforcés par des anneaux de forte section ou par la bride elle-même, ce qui n'est pas possible faute de place à l'intérieur de l'espace disponible dans le cas de brides à emboitement.

US 4 455 334 décrit des anneaux comportant des couches spiralées d'un ruban de graphite expansé auquel a été incrusté pour faciliter le démontage un grillage, un fil ou une bande métallique pour faciliter l'extraction de l'anneau après emploi dans un presse étoupe. Mais ces anneaux d'étanchéité sont conçus pour des étanchéités de presse-étoupes et non pour des raccords à brides. Au coeur d'un joint de brides dont on attend une étanchéité excellente et de longue durée, le type d'incrustation décrit dans le brevet, formerait un interface métal-graphite, donc une zone de moindre étanchéité susceptible de réaliser une fuite entre les deux volumes que le joint doit au contraire isoler.

EP-A-0 251 950 décrit des éléments de gainage métalliques annulaires qui sont susceptibles d'empêcher le graphite de s'extruder. Toutefois, dans l'espace ménagé entre chaque élément de gainage et la bride règne une pression de fluide et, en conséquence, ne participe pas à l'étanchéité, ce qui peut être une cause de fuite.

De plus et surtout, la largeur de graphite expansé en contact avec la bride est beaucoup trop réduite et elle est donc insuffisante pour réaliser une étanchéité efficace.

La présente invention a pour but de pallier aux inconvénients précédents et de proposer un joint d'étanchéité adapté à tout type de bride et notamment aux brides à simple ou double emboitement, ainsi qu'un procédé de réalisation d'un tel joint ou anneau d'étanchéité.

Le procédé et l'anneau d'étanchéité selon l'invention sont tels que définis dans les revendications 1 et 3.

L'anneau obtenu selon le procédé comporte une ou deux tresses formant ceintures, de préférence métalliques qui, de par leur possibilité de se déformer, adaptent automatiquement leurs dimensions à celles variables des gorges des brides dans lesquelles sont reçues les anneaux. De ce fait, lesdites tresses ou ceintures sont capables de retenir le graphite.

L'anneau selon l'invention présente une excellente tenue aux températures les plus élevées et aux chocs thermiques et une excellente inertie chimique aux températures élevées.

De plus, la reprise élastique de l'anneau selon l'invention est indépendante de la température. Une très faible pression est nécessaire pour diminuer la porosité à un niveau assimilable à une bonne étanchéité. Enfin, il y a une très bonne conservation de l'étanchéité, même après diminution des efforts de serrage.

D'autres avantages et caractéristiques apparaîtront à la lecture de la description qui suit, en référence aux dessins annexés sur lesquels :

La figure 1 est une vue latérale partielle d'une tresse utilisée dans l'anneau d'étanchéité selon l'invention.

La figure 2 est une vue en coupe schématique et partielle de l'anneau selon l'invention et muni de deux tresses intérieure et extérieure, avant compression.

La figure 3 est une vue schématique de la compression réalisée sur l'anneau d'étanchéité représenté sur la figure 2.

La figure 4 est une vue en coupe schématique et partielle de demi-brides à simple et double emboitement.

La figure 5 est une vue en coupe schématique et partielle d'un anneau selon l'invention en fin de précompression et comprenant des tresses enroulées sur une périphérie.

La figure 6 est une vue en coupe schématique de l'anneau d'étanchéité en utilisation dans une bride à simple emboitement.

La figure 7 est une vue en coupe schématique de l'anneau d'étanchéité en utilisation dans une bride à double emboitement.

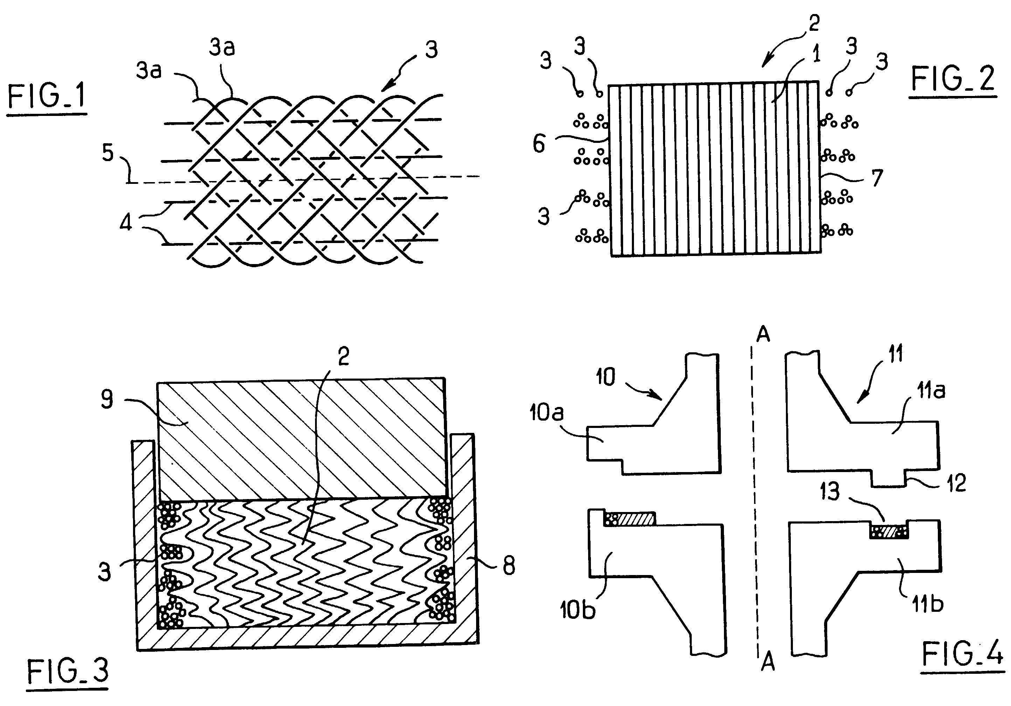

Le procédé de réalisation d'un anneau d'étanchéité selon l'invention consiste à utiliser un ruban 1 de graphite, par exemple, de 10 mm de large et 0,5 mm d'épaisseur, puis à l'enrouler sur lui-même pour obtenir un enroulement sous forme de cylindre tel que représenté en 2 sur la figure 2. Simultanément ou successivement, dans un autre poste, on confectionne une tresse 3 du type représenté sur la figure 1. La tresse 3, dans l'exemple représenté, est obtenue avec des fils métalliques, par exemple, en un acier inoxydable du type 314 ou 316, ou en inconnel ou autre métal, dont le diamètre est supérieur à 100 µm et, de préférence, égal à 127 µm. Le nombre de fils utilisés pour la confection dépend essentiellement des caractéristiques physiques et techniques que doit présenter l'anneau d'étanchéité. La tresse 3 de la figure 1 est plate et constituée par 9 fils 3a enroulés hélicoïdalement de manière à obtenir des spires sensiblement parallèles, et par au moins deux fils longitudinaux 4, sensiblement parallèles à l'axe longitudinal 5 de la tresse 3. Les fils 4 sont rectilignes et tendus au moment du tressage, ce qui permet de maintenir, au cours de l'enroulement, la largeur prédéterminée de la tresse 3 qui est, de préférence, voisine de la largeur du ruban de graphite utilisé. De plus, de larges passages sont disponibles entre les fils que le graphite occupe en partie pendant la précompression du joint ultérieure.

Suivant la destination de l'anneau d'étanchéité, une ou plusieurs tresses 3 sont enroulées sur la périphérie extérieure 6 dudit anneau dont seule une partie est représentée schématiquement en coupe sur les dessins, sur la périphérie intérieure 7 ou sur les deux périphéries 6 et 7.

En se référant à la figure 2, on constate que plusieurs tresses 3 sont enroulées sur les périphéries extérieure 6 et intérieure 7.

Le cylindre de graphite 2, muni de son ou ses enroulements de tresses 3, est placé dans un moule 8 (figure 3). L'ensemble constitué par le cylindre de graphite 2 et les tresses 3, est comprimé au moyen d'un piston ou autre organe de compression 9. Pendant cette compression à une valeur prédéterminée, les fils métalliques des tresses 3 sont faiblement déformés et conservent la forme qui leur est donnée sans altérer, de façon sensible, l'élasticité du joint obtenu. Le nombre de fils utilisés dans les tresses 3 et le nombre de tours d'enroulement des tresses sont déterminés en fonction du diamètre des fils métalliques 3a,4 utilisés et du jeu ou espace maximum susceptible d'exister entre les parois cylindriques en regard dans l'emboitement des brides.

Les dimensions du moule 8 tiennent compte de la reprise élastique du joint après démoulage, de façon que le joint puisse être introduit dans le logement auquel il est destiné à l'intérieur de la bride femelle.

La force de compression exercée sur l'anneau est inférieure et, de preférence, sensiblement égale à celle du serrage de la bride à laquelle il est destiné. Dans les essais effectués, la force de compression était de 486 000 Newtons, ce qui permettait d'obtenir un joint d'épaisseur d'environ 3,5 mm alors que la profondeur de la gorge ménagée dans la bride femelle, et destinée à recevoir le joint, était de 4,3 mm.

Sur la figure 4 sont représentées deux demi-brides 10 et 11 situées de part et d'autre d'un axe A-A, la demi-bride 10 comprenant une partie mâle 10a s'emboitant dans une partie femelle 10b par simple emboitement, alors que la demi-bride 11 comprend une partie mâle 11a s'emboitant dans la partie femelle 11b par double emboitement grâce à un bossage annulaire 12 s'engageant dans une rainure annulaire 13 correspondante.

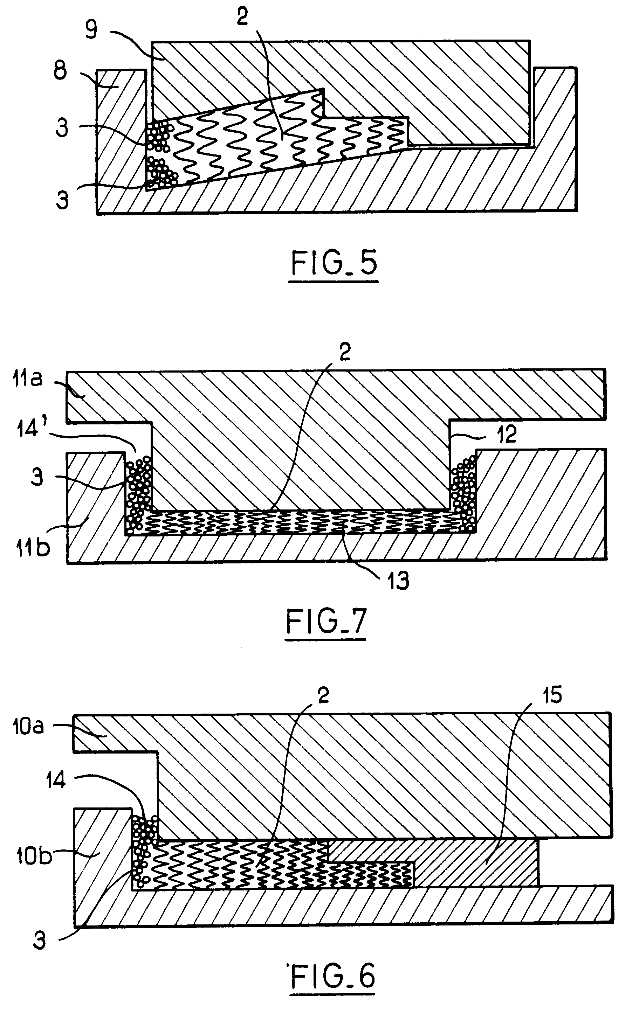

La figure 5 représente un anneau d'étanchéité destiné à une bride à simple emboîtement, du type représenté sur la figure 6, en fin de précompression de l'enroulement de graphite 2 qui est muni de tresses 3 enroulées sur la seule périphérie extérieure 6 dudit enroulement 2.

Dans le cas d'une bride à simple emboîtement, représentée sur la figure 6, les tresses 3 sont disposées sur la seule périphérie extérieure du joint et après serrage de la partie mâle 10a sur la partie femelle 10b, les tresses 3 remplissent une partie de l'espace 14 compris entre les parties mâle et femelle 10a et 10b . L'emboîtement simple de la bride, représentée sur la figure 6, fait intervenir un anneau 15, destiné à retenir le graphite malgré la forte pression que celui exerce vers l'intérieur de la bride; la forme de cet anneau 15 est décrite par exemple dans la demande EP-A-0 496 651.

Dans le cas d'une bride à double emboitement 11 (figure 7), le joint est disposé au fond de la gorge ou rainure 13 et il est muni d'enroulement de tresses intérieures et extérieures. Lors du serrage, les fils des tresses 3 occupent l'espace 14' compris entre les parois cylindriques en regard du bossage 12 et de la gorge annulaire 13.

Dans les deux cas d'emboîtements simple ou double, les fils des tresses 3 forment un maximum de contact entre eux, soit suivant la génératrice des parois cylindriques en regard, soit suivant des lignes de contact en forme de spirales très allongées qui présentent une relative étanchéité, contrairement aux contacts existants entre les mailles d'un produit tricoté.

Le joint selon la présente invention est déformable et présente une excellente aptitude pour se conformer à l'espace disponible et adapter sa forme à celle dudit espace tout en repoussant les fils des tresses vers les espaces 14 ou 14' jusqu'à ce que les fils des tresses se recompriment sous la pression du graphite en formant des arcboutements qui sont immobilisés dans lesdits espaces 14 et 14'. Les forces de frottement plus importantes entre les métaux en présence qu'entre les cristaux de graphite et entre métal et graphite, contribuent à former des obstacles métalliques qui empêchent le graphite de s'extruder entre les fils des tresses et de venir même en partie dans les espaces 14 et 14'. Ainsi, le graphite est toujours maintenu dans un volume stabilisé, ce qui permet d'obtenir une bonne étanchéité.

## Revendications

1. Procédé de réalisation d'un anneau d'étanchéité en graphite à partir d'un enroulement (2) d'un ruban en graphite (1), du type consistant à disposer au moins une ceinture de renfort (3) sur au moins une des périphéries intérieure et/ou extérieure (6, 7) dudit enroulement de ruban en graphite de manière à constituer un anneau armé dans lequel ladite ceinture constitue une barrière et qui est ensuite comprimé à une valeur prédéterminée, caractérisé en ce que la ceinture de renfort est constituée par une tresse de fils, ladite tresse s'interpénétrant avec ledit enroulement en graphite, et en ce que ladite tresse, après compression, retient le graphite dans un espace sensiblement stabilisé.

2. Procédé selon la revendication 1, caractérisé en ce que la tresse de fils est métallique.

3. Anneau d'étanchéité obtenu suivant le procédé selon l'une des revendications 1 ou 2 comprenant un enroulement en graphite (2), au moins une ceinture de renfort (3) disposée sur au moins une des périphéries intérieure et/ou extérieure dudit enroulement, caractérisé en ce que la ceinture de renfort est constituée par au moins une tresse de fils et en ce que au moins une partie du graphite pénètre entre les fils de ladite tresse.

4. Anneau d'étanchéité selon la revendication 3, caractérisé en ce que la tresse de fils (3) est métallique.

5. Anneau d'étanchéité selon la revendication 4, caractérisé en ce que la tresse métallique (3) est disposée sur une seule périphérie intérieure (7) ou extérieure (6) dudit enroulement.

6. Anneau d'étanchéité selon la revendication 4, caractérisé en ce que la tresse métallique (3) est disposée sur les deux périphéries (6,7) de l'enroulement.

7. Anneau d'étanchéité selon la revendication 4, caractérisé en ce que la tresse métallique (3) est constituée par plusieurs fils sensiblement parallèles (3a) enroulés hélicoïdalement et par des fils rectilignes (4) parallèles à l'axe longitudinal (5) de ladite tresse (3).

8. Anneau d'étanchéité selon la revendication 7, caractérisé en ce que les fils métalliques (3a, 4) sont en acier inoxydable d'un diamètre supérieur à 100 µm.

9. Anneau d'étanchéité selon la revendication 8, caractérisé en ce que le diamètre des fils est d'environ 127 µm.

## Patentansprüche

1. Verfahren zur Herstellung eines Dichtrings aus Graphit, ausgehend von einer Wicklung (2) eines Graphitbandes (1), ein Verfahren des Typs, das darin besteht, daß mindestens ein Verstärkungsgürtel (3) an mindestens einem inneren und/oder äußeren Rand (6,7) der Wicklung des Graphitbandes angeordnet wird, um so einen verstärkten Ring zu bilden, in welchem der Gürtel eine Barriere bildet und der dann auf einen vorgegebenen Wert komprimiert wird, dadurch gekennzeichnet, daß der Verstärkungsgürtel aus einem Fasergeflecht besteht, wobei das Geflecht und die Wicklung aus Graphit sich gegenseitig durchdringen, und dadurch, daß nach der Kompression das Geflecht den Graphit in einem im wesentlichen stabilisierten Raum hält.

2. Verfahren nach Anspruch 1, dadurch gekennzeichnet, daß das Fasergeflecht metallisch ist.

3. Dichtring erhältlich gemäß dem Verfahren nach einem der Ansprüche 1 oder 2, der eine Wicklung aus Graphit (2), mindestens einen Verstärkungsgürtel (3) aufweist, der an mindestens einem inneren und/oder einem äußeren Rand der Wicklung angeordnet ist, dadurch gekennzeichnet, daß der Verstärkungsgürtel aus mindestens einem Fasergeflecht besteht und dadurch, daß mindestens ein Teil des Graphits zwischen die Fasern des Geflechts eindringt.

4. Dichtring nach Anspruch 3, dadurch gekennzeichnet, daß das Fasergeflecht (3) metallisch ist.

5. Dichtring nach Anspruch 4, dadurch gekennzeichnet, daß das Metallgeflecht (3) an einem einzigen inneren (7) oder äußeren (6) Rand der Wicklung angeordnet ist.

6. Dichtring nach Anspruch 4, dadurch gekennzeichnet, daß das Metallgeflecht (3) an den zwei Rändern (6,7) der Wicklung angeordnet ist.

7. Dichtring nach Anspruch 4, dadurch gekennzeichnet, daß das Metallgeflecht (3) aus mehreren im wesentlichen parallelen Fasern (3a), die schraubenförmig aufgewickelt sind, und aus geradlinigen Fasern (4), die parallel zur Längsachse (5) des Geflechts (3) sind, besteht.

8. Dichtring nach Anspruch 7, dadurch gekennzeichnet, daß die Metallfasern (3a,4) aus rostfreiem Stahl mit einem Durchmesser von mehr als 100 µm sind.

9. Dichtring nach Anspruch 8, dadurch gekennzeichnet, daß der Durchmesser der Fasern ungefähr 127 µm beträgt.

## Claims

1. Method for producing a graphite sealing ring from a winding (2) of a graphite strip (1), of the type consisting of disposing at least one reinforcing band (3) on at least one of the inner and/or outer edges (6, 7) of the said graphite strip winding, in such a way as to constitute a reinforced ring in which the said band constitutes a barrier and which is then compressed to a predetermined value, characterised in that the reinforcing band is comprised of a braid of threads, the said braid interpenetrating with the said graphite winding, and in that the said braid, after compression, holds the graphite in a substantially stabilised space.

2. Method according to claim 1, characterised in that the braid of threads is metal.

3. Sealing ring obtained in accordance with the process according to one of claims 1 or 2, comprising a graphite winding (2) and at least one reinforcing band (3) disposed on at least one of the inner and/or outer edges of the said winding, characterised in that the reinforcing band is comprised of at least one braid of threads and in that at least a part of the graphite penetrates between the threads of the said braid.

4. Sealing ring according to claim 3, characterised in that the braid of threads (3) is metal.

5. Sealing ring according to claim 4, characterised in that the metal braid (3) is disposed on a single inner edge (7) or outer edge (6) of the said winding.

6. Sealing ring according to claim 4, characterised in that the metal braid (3) is disposed on the two edges (6, 7) of the winding.

7. Sealing ring according to claim 4, characterised in that the metal braid (3) is comprised of several substantially parallel threads (3a) wound helicoidally, and by straight threads (4) parallel to the longitudinal axis (5) of the said braid (3).

8. Sealing ring according to claim 7, characterised in that the metal threads (3a, 4) are of stainless steel of a diameter greater than 100µm.

9. Sealing ring according to claim 8, characterised in that the diameter of the threads is about 127µm.
